# EUROPEAN PATENT SPECIFICATION

(11) **EP 3 274 594 B1**
(45) Date of publication and mention of the grant of the patent: **25.03.2020**
(21) Application number: 15742129.8
(22) Date of filing: 02.06.2015
(51) Int. Cl.: F16B 7/18, F16B 9/02

(54) **FRAME SYSTEM COMPRISING CONNECTION JOINTS**
RAHMENSYSTEM MIT VERBINDUNGSSTÜCKEN
SYSTÈME DE CADRE COMPRENANT DES JOINTS DE RACCORDEMENT

(30) Priority: 25.03.2015 UA 201502710
(43) Date of publication of application: 31.01.2018
(73) Proprietor: Mehtiyev, Elshan Gatam Ogly, Kharkiv 61038 (UA)
(72) Inventor: Mehtiyev, Elshan Gatam Ogly, Kharkiv 61038 (UA)
(74) Representative: Jeck, Anton
(86) International application number: PCT/UA2015/000048
(87) International publication number: WO 2016/153456

(56) References cited:
- DE-U1- 20 202 183
- JP-A- H01 210 542
- US-A- 4 271 654

## Description

The invention relates to a three-dimensional frame system comprising connection joints, which is suitable for mounting a mobile fair, exhibition constructions and billboards equipped with glass, metal or ceramic panel facades.

Glass and glass products are widely used in construction and design decoration, for example, as partitions, protective fence stairs, balconies, openings and as an external design of the facade of buildings, in the construction of exhibition equipment and etc.

US 4,271,654 teaches a three dimensional structure made of open or close profile structural beams, said beams being connected perpendicularly to each other at all multiple joints and joined by an end face plate of said beams with cubic joints.

JP H01 210542 A discloses a joint for profile structural beams, which are connected via a screw connection, wherein the joint consists of a housing in which element are arranged for a screw connection between the joint and the profile structural beams.

Traditionally, a rigid frame of load-bearing structures of the building or rigidly fixed metal racks is used for an installation of glass panel partitions, facades, stained glass. The glass panels connected to the frame by a system of fastening of glass, with the cable structure or without it. Such systems named spider glazing system [1, 2] contains structural elements similar to the one produced «Kin Long» [3]. The main difference between spider glazing system and other methods of mounting glass structures is the lack of load-bearing structures between glass panels, because of their fixation is carried out by pre-drilled holes and rutel to the spider, which is a spatial metal bracket attached to the bearing structures.

Spider glazing system allows to build a reliable stationary glass construction of different shapes having tight coupling to the supporting frame. Just rigid frame defines the configuration of glass panel construction. However, the previous formation of the load-bearing frame structure or dependence on the supporting structures of the building is both a failure of spider glazing system, because it makes impossible its use for mobile trade or exhibition structures as well as exhibition stands contains a large area of glass facades. Also spider glazing system is not adapted for the formation of curved glass facades.

The bearing frame is known (prototype) that contains braces and connection joints produced by Leitner Burkhard (DE), constructions «CLIC» and «CLIC Rund» of Magnetic system [4, 5]. This frame is form by combining tubular connective elements and connection joints, which made in form of a rectangular parallelepiped or trapezoidal prism. For this purpose cylindrical pins, having a ferromagnetic plot in the free-thread end, screwed in the connection joints, and connect the free-thread end with the hole of the tubular connecting element to fixing with magnet located on it. Construction «CLIC» and «CLIC Rund» allow to built bearing frame easily and quickly, which can be used in the form of a versatile modular system for two and three dimensional presentations, different structures, including arched, curved and rounded structures. Using a special attachment contains rubber circular extenders a light vinyl and textile not curved facade panel elements attached to the supporting frame. Also glass facade panel elements are able to join to the supporting frame. However, because of their considerable weight stiffness of the load-bearing frame structures should be strengthened by diagonal connecting elements that increase resistance to distortion of the frame structure.

The design of the connection joints of «CLIC» and «CLIC Rund» of Magnetic system hinder their wide use for building mobile trade and exhibition constructions and promotional stands using glass, metal, ceramic facade panel elements having not curved shape as well as not allow to apply glass, metal, ceramic facade panel elements with rounded shape. Fixation the panels to the connection joints of «CLIC» and «CLIC Rund» of Magnetic system form considerable distance between panel elements and not allow to form a visual continuous facade surface of the panel elements.

The present invention provides a frame system as defined in claim 1. A preferred embodiment is defined by dependent claim 2.

The invention is explained by means of following drawings, where:
FIG. 1 shows the connecting joints in the form of trapezoidal prism having the threaded hole on its base and its opposite side, and having two threaded holes on the other sides. Variants (1a) and (1b) are different one from the other in position of trapezoidal sides of connection joints.
FIG. 2 shows the connecting joint in the form of trapezoidal prism having two screw holes on its base and on its opposite side, and four threaded holes on mutually opposite lateral sides that are designed to connect to the vertical panel elements.
FIG. 3 shows as an example of the connecting joints in the form of trapezoidal prism with partial mounting of the screw pins.
FIG. 4 shows the connecting joint in the shape of a rectangular prism having one threaded hole on its base and its opposite side, and having two threaded holes on the other sides.
FIG. 5 shows the connecting joint in the form of a rectangular prism having two screw holes on its base and its opposite side, and having four threaded holes on mutually opposite lateral sides that used to connect the vertical panel elements.

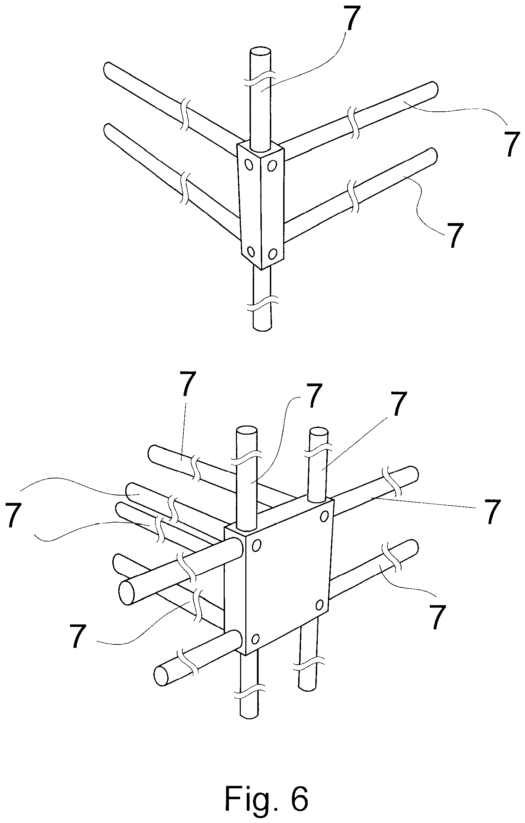

FIG. 6 shows an example of connection joints having mounted connecting elements.
FIG. 7 shows an example of connection joints having mounted panel elements.
FIG. 8 shows the screw pin, the connecting elements and lock.
FIG. 9 shows a scheme of mounting frame system with curved panel elements.
FIG. 10 shows a scheme of mounting frame system with not curved panel elements.

Connection joint in the form of a prism has threaded holes (1) in which twisted screw pins (4) for mounting connectors elements (7) or locks (9) for the mounting of panel elements (8).

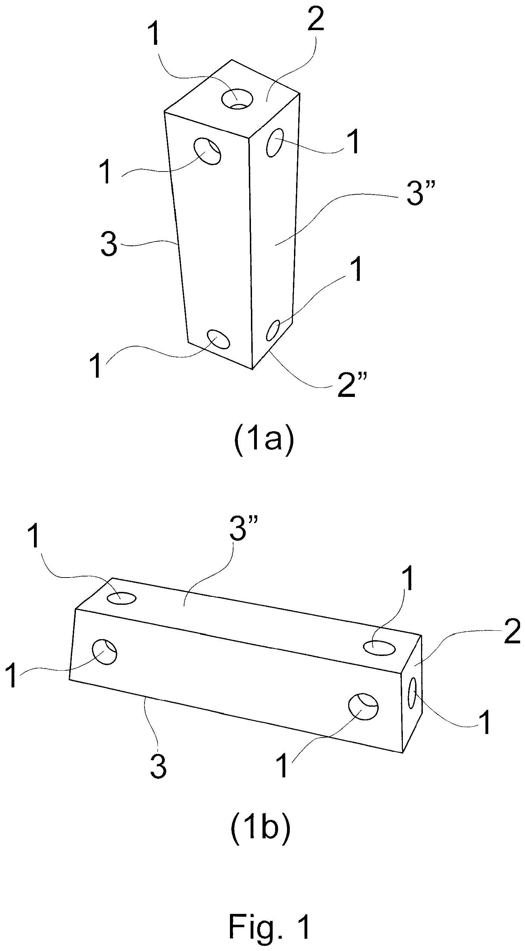

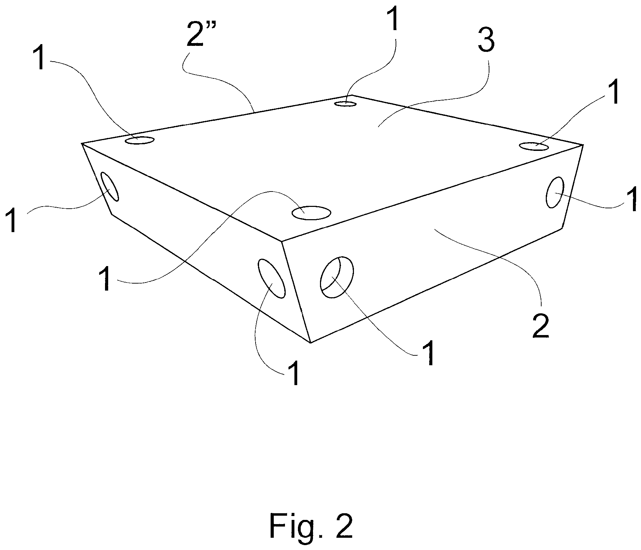

The connection joint in the form of trapezoidal prism is shown in FIG. 1. Depending on the variant of performing this connection joint may have one threaded hole placed on the base (2) of prism and one threaded hole placed on opposite side (2 ") or may have two holes instead one (see Fig. 2). In according to the second variant, the side (3) and opposite side (3 "), designed for connection of vertical panel elements, have four threaded holes, unlike the first variant which have two holes only. Additionally, the side (3) may have a curved surface and the opposite side may have concave or smooth surface (it is not shown on the figures).

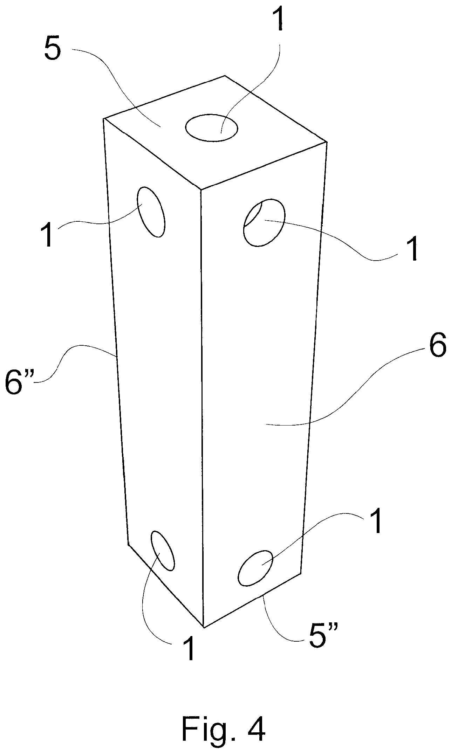

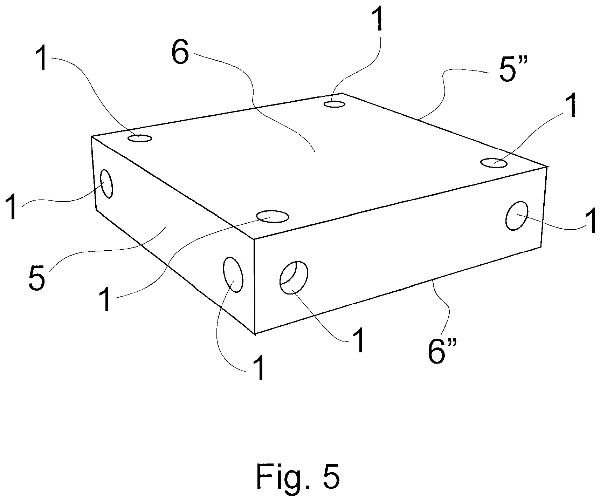

The connection joint in the form of a rectangular prism is shown in FIG. 4. Depending on the variant this connection joint may have one threaded hole placed on the base (5) of prism and pleased on opposite side (5 ") or may two holes instead one (see Fig. 5). In according to the second version, the side (6) and opposite side (6 "), designed for connection of vertical panel elements, have four threaded holes, unlike the first variant which have two holes only.

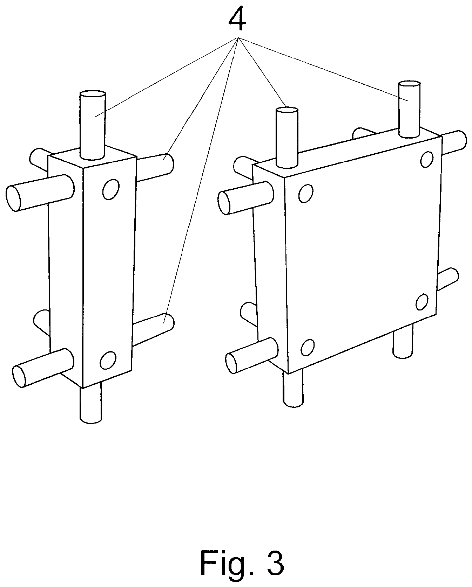

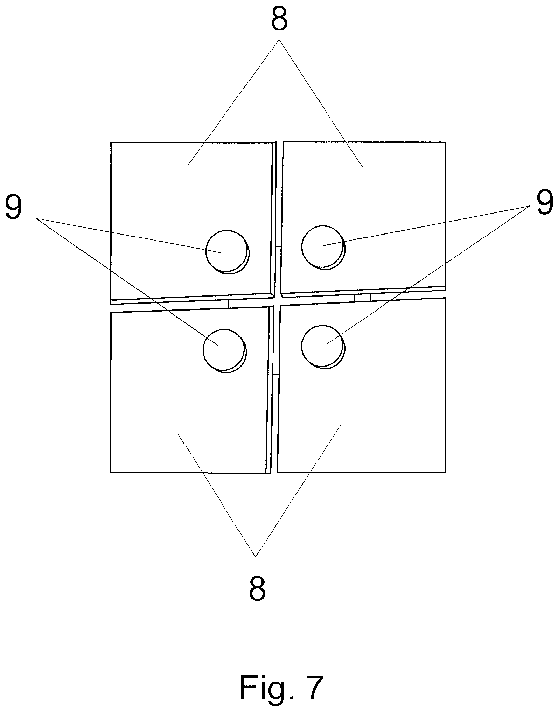

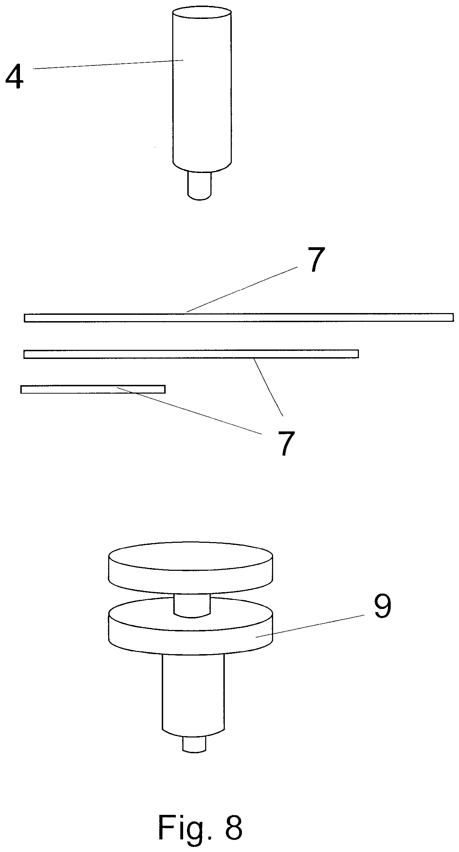

During forming of the frame system the screw pins (4) fixed in threaded holes (1) of connection joints (see Fig. 3), and then connection joint connected to each other via the connecting elements (7) in just the same way as it was made in the construction of «CLIC» and «CLIC Rund» of Magnetic system. Depending on the construction of the frame system a length of connecting elements (7) can be different. Then curved and/or not curved panel elements (8) connect to the threaded holes (1) placed on the sides of the connection joints, designed for mounting of the panel elements, via the locks (9) . Locks (9) are shown in FIG. 7 and FIG. 8 and are not object of this invention, and therefore the locks of different forms, designed for screwing into the threaded holes (1) of connection joints may used in according to the invention. It's also applies to constructions of screw pins and connecting elements.

Just using the described herein above connection joints the frame system having as not curved well as curved panel elements made of glass or metal or metal alloys or ceramics or a combination of these materials may be formed.

The joint (A) is shown in FIG. 1 (1a). The sides (2) and (2") of this joint are parallel and have the shape of a trapezoid. The joints (C) and (D) are shown in FIG. 1 (1b). The sides (2) and (2") of this joint is not parallel. The lateral sides of this joint, that different from sides (2), (2"), (3) and (3"), have trapezoid shape. This joint (C) are placed so as the curved panel elements are attached to the lateral side (3), which has a higher surface area than the side (3 "). In a contrary, the joint (D) are placed so as -the curved panel elements are attached to the lateral side (3 "), which has a lower surface area than the side (3). In the first case the frame system having curved exterior surface is formed, in the second case - the frame system having concave exterior surface is formed. Joints (A) and (C) are designed to connection of two curved panel elements.

Joints (B) and (G) are designed to connection of four curved panel elements and create curved or concave surface facade of the frame system like the joints (C) and (D). The sides (2) and (2 ") of joints (B) and (G) are parallel and have the shape of a trapezoid (see Fig. 2).

Joint (F) is used for connection four not curved panel elements (see Fig. 5). Joint (E) is used for connection two panel elements (see Fig. 4).

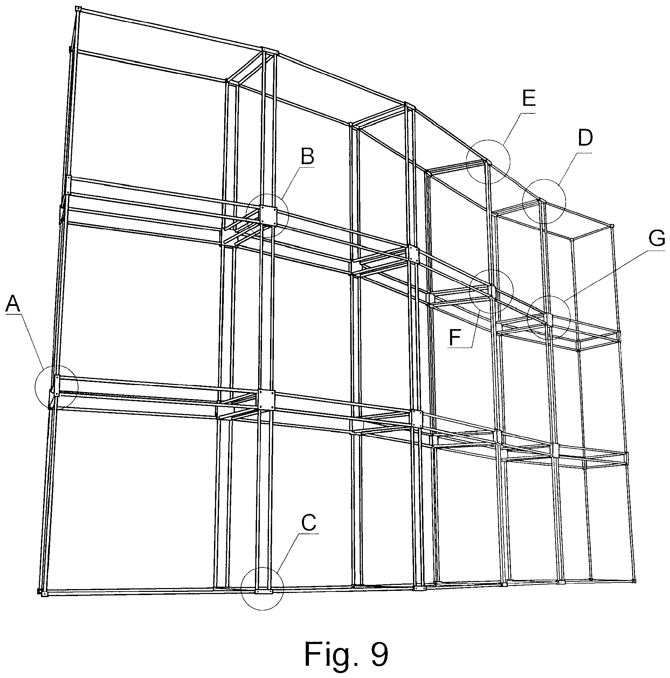

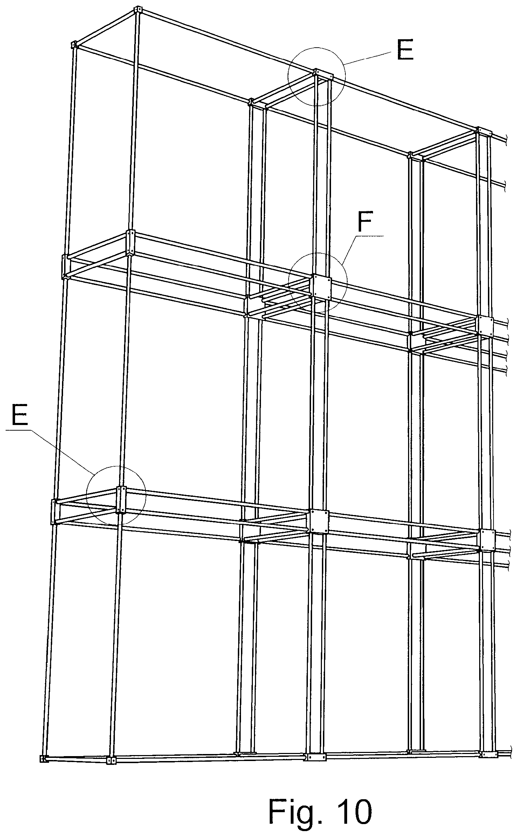

The above description of the frame system explains principle for its construction only, and is not limited to those embodiments shown in FIG. 9 and FIG. 10. Formed in this way the frame system is unexpectedly reliable for use of heavy panel elements made of glass or metal or metal alloys or ceramics or a combination of these materials. At the same time, rigidity of the frame system is provided exclusively of panel elements coupled together via connection joints and this feature distinguishes the described herein above frame system from the prototype and other analogues.

The frame system make it possible to quickly install a three dimensional mobile trade and exhibition structures as well as advertising stands, having different not segmented construction, including arch, curved and rounded construction and front surface, having a minimum gaps between the panel elements.

Sources of information:
1. Spider glazing system of fronts: technology of the future [Link code]. - Access: http://build-experts.ru/spaidernoe-osteklenie-fasadov-texnologii-budushhego/#h2 3
2. Spider glazing [Link code]. - Access:
   http://www.glasspro.ua/products/spider/
3. Spider glazing [Link code]. - Access:
   http://uau.com.ua/index/spaidernoe osteklenie/0-51.
4. Products [Link code]. - Access:
   http://www.burkhardtleitner.de/en/products.html
5. Patent UA 49021 published on 16.09.2002 g. "Bearing frame with slanting and connecting nodes", IPC: E04V1 / 19, the applicant Laytner Burkhardt (DE).

## Claims

1. Frame system, comprising connecting elements (7) and connection joints connected to the connecting elements (7) via screw pins (4), and vertical panel elements (8) attached to the connection joints via locks (9) wherein the frame system contains not curved vertical panel elements and/or curved vertical panel elements made of glass and/or metal or metal alloys and/or ceramics and the connection joint is made in the shape of a trapezoidal prism or the shape of a rectangular prism, which comprise a basis (2 or 5) and an opposite side (2" or 5"), the basis (2 or 5) of the connection joint and the opposite side (2" or 5") have at least one threaded hole and other sides have at least two threaded holes for mounting the vertical panel elements or the connecting elements, and two mutually opposite sides of the rectangular prism (or 6 and 6") or two mutually opposite lateral sides of the trapezoidal prism (3 and 3") are used to connect the vertical panel elements.

2. Frame system of Claim 1 is **characterized by** the frame system containing a connection joint wherein one of the mutually opposite sides of the trapezoidal prism having a greater surface area (3) has a curve surface and the other side has concave or smooth surface.

## Patentansprüche

1. Rahmensystem mit Verbindungselementen (7) und Verbindungsvorrichtungen, die über Schraubstifte (4) mit den Verbindungselementen verbunden sind, und mit vertikalen Paneelelementen (8), die mit den Verbindungsvorrichtungen über Sperren (9) verbunden sind, **dadurch gekennzeichnet, dass** das Rahmensystem nicht gebogene vertikale Paneelelemente und/oder gebogene vertikale Paneelelemente aufweist, die aus Glas und/oder Metall oder Metalllegierungen und/oder Keramik gefertigt sind, dass die Verbindungsvorrichtung in Form eines Trapezprismas oder eines Rechteckprismas gefertigt ist, das eine Basis (2 oder 5) und eine entgegengesetzte Seite (2" oder 5") aufweist, dass die Basis (2 oder 5) der Verbindungsvorrichtung und die entgegengesetzte Seite (2" oder 5") mindestens ein Gewindeloch und auf der anderen Seite mindestens zwei Gewindelöcher zur Befestigung der vertikalen Paneelelemente oder Verbindungselemente aufweisen, und dass wechselseitig entgegengesetzte Seiten des Rechteckprismas (6 und / oder 6") oder zwei wechselseitig gegenüberliegende seitliche Seiten des Trapezprismas (3 und 3") dazu verwendet werden, die vertikalen Paneelelemente zu verbinden.

2. Rahmensystem nach Anspruch 1, **dadurch gekennzeichnet, dass** es eine Verbindungsvorrichtung enthält, bei der eine der wechselseitig gegenüberliegenden Seiten des Trapezprismas einen größeren Oberflächenbereich (3) als eine gebogene Oberfläche und die andere Seite eine konkave oder glatte Oberfläche aufweist.

## Revendications

1. Système d'encadrement avec des éléments de liaison (7) et des dispositifs de connexion reliés aux éléments de liaison via des broches filetées (4) et avec des éléments de panneaux verticaux (8) reliés aux dispositifs de connexion via des barrages (9) caractérisé de sorte que le système d'encadrement présente des éléments de panneaux non courbés verticaux et/ou des éléments de panneaux courbés verticaux produits de verre et/ou de métal ou d'alliages métalliques et/ou de céramique, que le dispositif de connexion est produit sous forme de prisme de trapèze ou de prisme de rectangle présentant une base (2 ou 5) et un côté opposé (2" ou 5"), que la base (2 ou 5) du dispositif de connexion et le côté opposé (2" ou 5") présentent au minimum un orifice taraudé et de l'autre côté au minimum deux orifices taraudés pour la fixation des éléments de panneaux verticaux ou des éléments de liaison, et que les côtés opposés à titre alternatif du prisme du rectangle (6 et/ou 6") ou deux côtés opposés latéraux à titre alternatif du prisme du trapèze (3 et 3") sont utilisés dans le but de relier les éléments de panneaux verticaux.

2. Système d'encadrement selon la revendication 1, caractérisé de sorte qu'il contient un dispositif de connexion présentant une plus grande zone superficielle des côtés opposés latéraux à titre alternatif du prisme du trapèze (3) que la surface courbée et l'autre côté une surface concave ou le cas échéant lisse.
